# EUROPÄISCHE PATENTANMELDUNG

(11) **EP 1 623 625 A2**
(43) Veröffentlichungstag der Anmeldung: **08.02.2006**
(21) Anmeldenummer: 05016755.0
(22) Anmeldetag: 02.08.2005
(51) Int. Cl.: A01N 35/02, A01N 37/02, A01N 59/00, A01N 59/04, A01N 37/36

(54) **Mittel zum Anlocken von Insekten**

(30) Priorität: 02.08.2004 DE 102004037636
(71) Anmelder: Universität Regensburg, 93053 Regensburg (DE)
(72) Erfinder: Geier, Martin, Dr., 93053 Regensburg (DE); Haas, Sebastian, 90537 Feucht (DE); Schwab, Stefan, 90449 Nürnberg (DE)
(74) Vertreter: Benninger, Johannes

(57) **Zusammenfassung**

Es wird ein Mittel zum Anlocken von Insekten vorgeschlagen, das wenigstens eine Verbindung der Formel (I) aufweist: 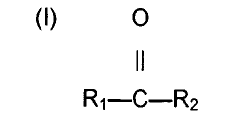 wobei
R₁ eine verzweigte oder unverzweigte Alkylkette mit 1 bis 30 C-Atomen ist, und R₂ ausgewählt ist aus der Gruppe bestehend aus: eine verzweigte oder unverzweigte Alkylkette mit 1 bis 30 C-Atomen, -H, -CH₃, -OH, -O-CH₃.

Derartige Verbindungen bzw. Zusammensetzungen lassen sich in Verbindung mit Fallensystemen zur Schädlingsbekämpfung sowie zur Erfassung einer Insektendichte (Monitoring) einsetzen.

## Beschreibung

Die Erfindung betrifft ein Mittel zum Anlocken von Insekten mit den Merkmalen des unabhängigen Patentanspruchs 1.

Stechmücken (Culicidae) bevölkern mit über 3200 Arten die unterschiedlichsten Lebensräume weltweit. Mückenweibchen benötigen für eine erfolgreiche Vermehrung Blut von warmblütigen Wirten, die je nach Art Menschen, Geflügel und/oder Vieh sein können. Insbesondere wenn die Mückenweibchen mehrere, auch unterschiedliche Wirte aufsuchen, können durch sie Pathogene übertragen werden. So übertragen sie bspw. Malaria-Plasmodien, Gelbfieber-und Denguefieber-Viren u. v. m. Durch die zunehmende Mobilität der Menschheit steigen auch die Risiken, dass sich derartige Krankheiten über deren ursprüngliche Verbreitungsgebiete (insbesondere die Tropen) hinaus ausbreiten. Bspw. kann eine Ansteckung über Mückenstiche von importierten Krankheitserregern erfolgen (,,Flughafen-Malaria"). Sich neu ausbreitende Krankheiten wie West Nile Fieber können durch erkrankte Reisende die Verbreitung dieser Krankheiten enorm beschleunigen und territorial erweitern. Blutsaugende Insekten zählen somit zu den bedeutendsten Hygieneschädlingen weltweit. Zudem können sie ausgesprochen lästig sein.

Deshalb ist es von großer Bedeutung, effektive Systeme zur Überwachung und Bekämpfung von Mücken zu entwickeln.

Eine wichtige Rolle können hierbei effektive Lockmittel spielen, die bspw. in Verbindung mit mechanischen Fangsystemen (Fallensystemen) oder auch in Verbindung mit Insektiziden verwendet werden, um Fangraten bzw. Tötungsraten zu erhöhen. Fallensysteme, die Wirtsreize bspw. durch visuellen Kontrast, Wärme, Feuchtigkeit und/oder Kohlendioxid imitieren und dabei auch weitere natürliche Lockstoffe wie Pheromone nutzen, sind vielfach beschrieben, bspw. in der DE 102 59 651 A1.

Bezüglich lockwirksamer Duftreize wurden insbesondere chemisch-analytische Untersuchungen von Wirtsdüften und Eiablagegewässern durchgeführt. Diese ergaben eine Reihe von Einzelkomponenten, die jedoch meist synergistisch, das heißt in Kombination mit anderen Duftstoffen wirksam sind ("Composition for attracting bloodsucking insects", USPTO 386582, Universität Regensburg, 06.06.2002). Ein aktivierender und anlockender Effekt für einen Duftstoff alleine konnte bisher nur für Milchsäure und Kohlendioxid festgestellt werden.

Die bisher in Mückenfallen zum Einsatz kommenden künstlichen Duftstoffkombinationen beinhalten bevorzugt Milchsäure. Beispiele für derartige Duftstoffkombinationen sind Milchsäure, Kohlendioxid und 1,3-Octenol; Milchsäure, Aceton und Dimethylsulfid (WO 00/65910); Milchsäure, Ammoniak und Fettsäuren; und Milchsäure, Ammoniak, Capronsäure und Essigsäure (WO 03/103395 A1). Die Verwendung derartiger Wirtsduft-Nachbildungen zeigt insbesondere in Kombination mit optisch-physikalisch wirkenden Fallensystemen große Attraktivitätssteigerungen der Fallen.

Da sich diese bisher bekannten Duftstoffkombinationen jedoch an Wirtsduftkomponenten orientieren, sind sie oft spezifisch für bestimmte Stechmücken, bspw. für bovinophile oder anthropophile Stechmücken. Selbst innerartlich unterscheiden sich die Vorlieben verschiedener Mücken-Populationen für bestimmte Konzentrationsverhältnisse von Duftstoffkomponenten. Ein universeller Mückenlockstoff wurde bislang nicht veröffentlicht.

Daher besteht ein Ziel der vorliegenden Erfindung darin, einen Mückenlockstoff zur Verfügung zu stellen, welcher universell für unterschiedliche Mückenarten einsetzbar ist. Seine Lockwirkung soll im Idealfall nicht gattungsspezifisch, sondern gattungsübergreifend sein und dabei eine möglichst starke Lockwirkung auf Flug- bzw. Schadinsekten entfalten.

Dieses Ziel der Erfindung wird mit dem Gegenstand des unabhängigen Patentanspruchs 1 erreicht. Merkmale vorteilhafter Weiterbildungen der Erfindung ergeben sich aus den abhängigen Ansprüchen.

Die Erfindung umfasst Verbindungen zum Anlocken von Insekten, Zusammensetzungen zum Anlocken von Insekten, die diese Verbindungen aufweisen und die Verwendung der Verbindungen bzw. Zusammensetzungen zur Insektenüberwachung bzw. -vernichtung.

Der Begriff "Alkylkette" umfasst im vorliegenden Zusammenhang sowohl unverzweigte als auch verzweigte Kohlenwasserstoffketten, die 1 bis 30 Kohlenstoffatome aufweisen.

Gemäß Anspruch 1 weist ein erfindungsgemäßes Mittel zum Anlocken von Insekten, wenigstens eine Verbindung der Formel (I) auf: 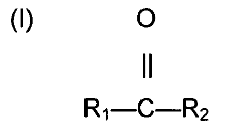
wobei
R₁ eine verzweigte oder unverzweigte Alkylkette mit 1 bis 30 C-Atomen ist, und
R₂ ausgewählt ist aus der Gruppe bestehend aus: eine verzweigte oder unverzweigte Alkylkette mit 1 bis 30 C-Atomen, -H, -CH₃, -OH, -O-CH₃.

Ein erfindungsgemäßes Mittel zum Anlocken von Insekten weist demnach wenigstens eine Verbindung aus wenigstens einer der folgenden Gruppen auf:
a) ein Keton oder ein Methylketon;
b) ein Aldehyd;
c) eine Carbonsäure oder einen Methylester davon,

wobei die Alkylkette der Verbindung jeweils aus 1, 2, 3, 4, 5, 6, 7, 8, 9, 10, 11, 12, 13, 14, 15, 16, 17, 18, 19, 20, 21, 22, 23, 24, 25, 26, 27, 28, 29 oder 30 C-Atomen bestehen kann.

Bevorzugt weist die Alkylkette der jeweiligen Verbindungen 3 bis 20 C-Atome auf.

Gemäß einer bevorzugten Ausführungsform der Erfindung weist ein Mittel zum Anlocken von Insekten wenigstens eine Verbindung der Formel (I) auf, wobei R₁ eine verzweigte oder unverzweigte Alkylkette mit 4 bis 14 C-Atomen ist, und R₂ ausgewählt ist aus der Gruppe bestehend aus: -CH₃, -O-CH₃.

Demnach sind im Rahmen der vorliegenden Erfindung bevorzugte Verbindungen Methylester und Methylketone, bei denen
R₁ eine Alkylkette mit 4, 5, 6, 7, 8, 9, 10, 11, 12, 13 oder 14 C-Atomen ist.

Ein erfindungsgemäßes Mittel zum Anlocken von Insekten kann jeweils nur eine der genannten Verbindungen aufweisen oder alternativ mehrere der genannten Verbindungen aufweisen.

Ein erfindungsgemäßes Mittel zum Anlocken von Insekten kann in Kombination mit wenigstens einem weiteren, anders gearteten Lockstoff oder wenigstens einer weiteren, anders gearteten Lockstoffzusammensetzung vorliegen. Hierbei kann ein erfindungsgemäßes Mittel die Lockwirkung von bekannten Lockstoffen und/oder bekannten Lockstoffzusammensetzungen erhöhen.

Derartige bekannte Lockstoffe und/oder Lockstoffzusammensetzungen können bspw. die folgenden sein:
a) Kohlendioxid und/oder
b) Ammoniak, Milchsäure und eine langkettige Fettsäure, insbesondere Ammoniak, Milchsäure und Capronsäure.

Ein erfindungsgemäßes Mittel zum Anlocken von Insekten kann in Kombination mit wenigstens einem bekannten lockwirksamen physikalischen Reiz vorliegen und dessen Lockwirksamkeit erhöhen. Derartige physikalische Reize umfassen bspw. Wärme, Luftfeuchte, Luftbewegungen, optische Signale wie Kontrastfelder etc.

Die vorliegende Erfindung beschreibt eine Substanzklasse, die bislang zur Insektenabwehr verwendet wurde, wie bspw. in der US 2003/0083387 A1 beschrieben ist. Die dieser bekannten Wirkung entgegen gesetzte Wirksamkeit dieser Substanzklasse als Insektenlockstoff, insbesondere als Mückenlockstoff, ist überraschend. Die Lockwirksamkeit der beschriebenen Substanzklasse zeigt sich insbesondere in niederen, physiologischen Konzentrationen bzw. bei geringen Abgaberaten. Bspw. sind die Verbindungen 2-Undecanon und Decanmethylsäureester bei Abgaberaten von 0,003 - 0,950 µmol/h für Stechmücken attraktiv.

Die erfindungsgemäße Substanzklasse konnte bislang nicht in einem Wirtsduft nachgewiesen werden, was auf eine wirtsunabhängige Wirksamkeit hinweist. Tatsächlich zeigt die erfindungsgemäße Substanzklasse gattungsübergreifende Wirkung und wird bspw. nicht nur von bestimmten Mückenarten als attraktiv empfunden.

Beispiele für wirksame Verbindungen der erfindungsgemäßen Substanzklasse sind 2-Undecanon (C₁₁H₂₂O; 2-Hendecanon, Methyl-n-nonylketon, Methylnonylketon, Nonylmethylketon, NSC 4028) und Decansäuremethylester (C₁₁H₂₂O₂; Caprinsäuremethylester, Estasol MD10, Metholen 2095, Methylcaprat, Methylcaprinat, Methyldecanoat, Methyl-n-caprat, Methyl-n-decanoat, NSC 3713, Pastell M 10, Uniphat A 30). Für beide Verbindungen konnte jeweils für sich alleine als auch in Kombination mit bekannten Lockstoffzusammensetzungen eine signifikante Lockwirkung bzw. eine signifikante Steigerung der vorhandenen Lockwirkung nachgewiesen werden.

Die nachfolgend dargestellten Versuchsergebnisse zeigen beispielhaft die Wirkung der beiden genannten Verbindungen. Die Erfindung ist jedoch nicht auf diese beiden speziellen Vertreter der beanspruchten Substanzklasse beschränkt. Auch eine Beschränkung auf die in diesem Zusammenhang genannten bekannten Lockstoffzusammensetzungen, deren Lockwirkung durch Zusatz einer der hier genannten Verbindungen gesteigert wird, ist nicht im Sinne der vorliegenden Erfindung. Vielmehr kann eine Kombination mit allen bekannten oder zum gegenwärtigen Zeitpunkt noch unbekannten Lockstoffzusammensetzungen erfolgen. Es zeigen:

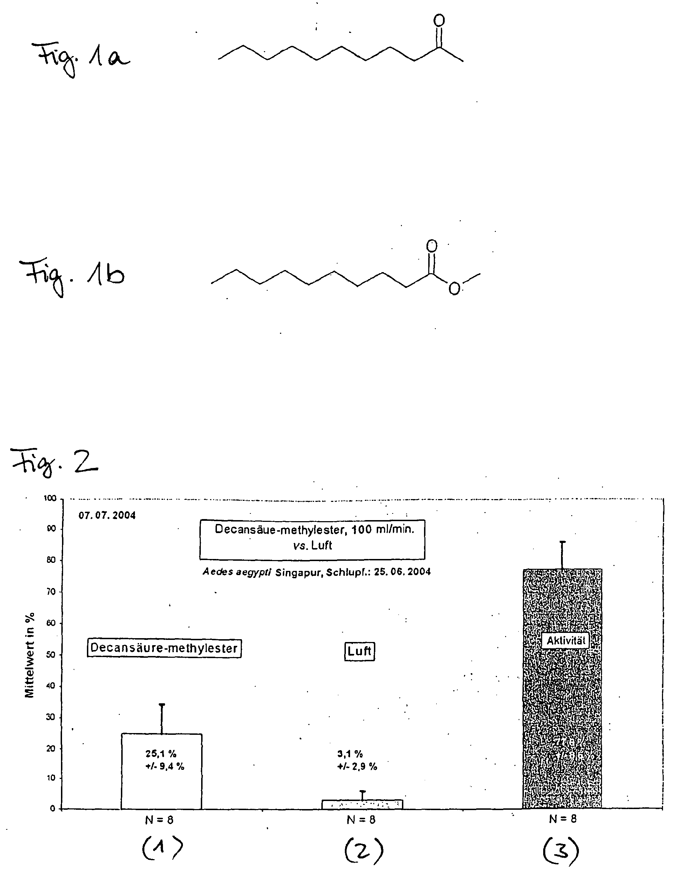

Figur 1a Strukturformel von 2-Undecanon;
Figur 1 b Strukturformel von Decansäuremethylester;
Figuren 2 bis 6 jeweils Ergebnisse aus Attraktivitätstests in einem Y-Olfaktometer in Form von Säulendiagrammen, wobei

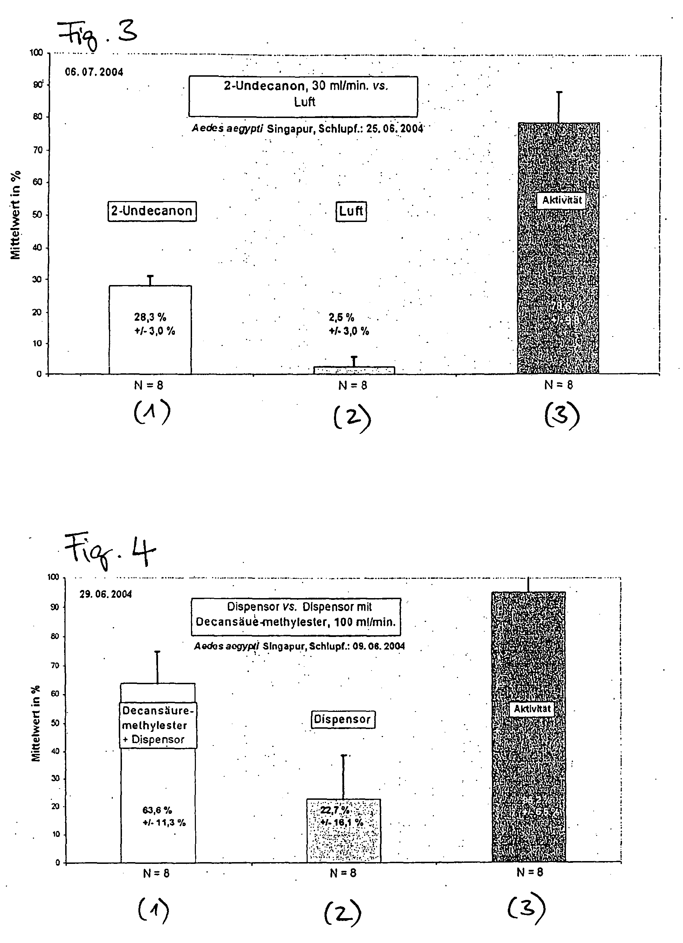

Figur 2 die attraktive Wirkung von Decansäuremethylester im Vergleich zu reiner Luft auf *Aedes aegypti* darstellt;

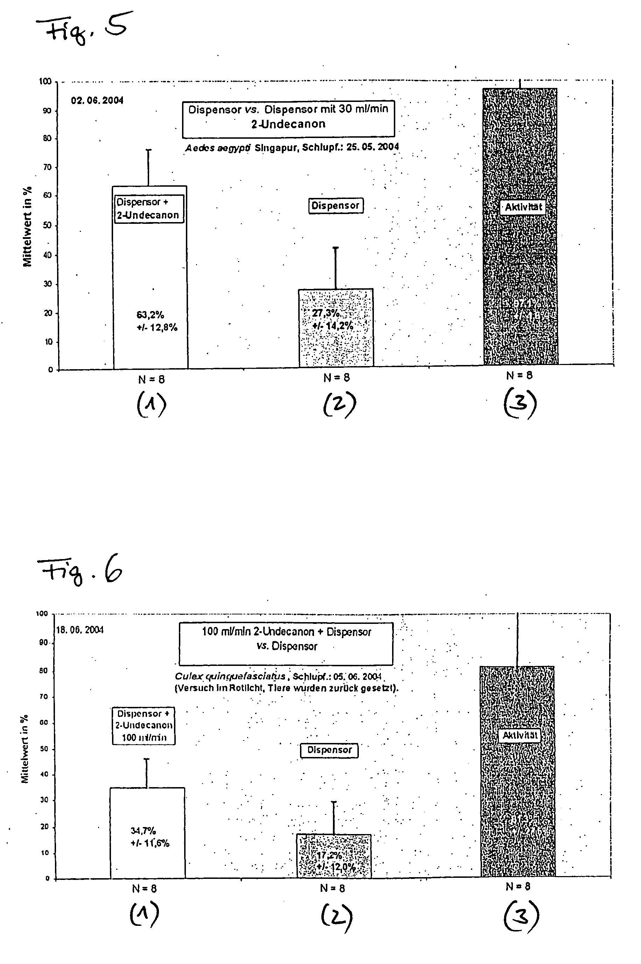

Figur 3 die attraktive Wirkung von 2-Undecanon im Vergleich zu reiner Luft auf *Aedes aegypti* darstellt;
Figur 4 die attraktive Wirkung von Decansäuremethylester in Kombination mit einer Lockstoffzusammensetzung aus Ammoniak, Milchsäure und Capronsäure im Vergleich zu der reinen Lockstoffzusammensetzung auf *Aedes aegypti* darstellt;
Figur 5 die attraktive Wirkung von 2-Undecanon in Kombination mit einer Lockstoffzusammensetzung aus Ammoniak, Milchsäure und Capronsäure im Vergleich zu der reinen Lockstoffzusammensetzung auf *Aedes aegypti* darstellt und
Figur 6 die attraktive Wirkung von 2-Undecanon in Kombination mit einer Lockstoffzusammensetzung aus Ammoniak, Milchsäure und Capronsäure auf *Culex quinquefasciatus* darstellt.

### Durchführung der Versuche

Die attraktive Wirkung der jeweiligen Verbindungen bzw. Zusammensetzungen wurde in einem Y-Olfaktometer gemessen. Das Y-Olfaktometer besitzt eine Freisetzungskammer, in der pro Versuch 20 Mücken der jeweiligen Art freigesetzt wurden. Die Freisetzungskammer ist über eine Röhre mit einer rechteckigen Kammer verbunden. An der gegenüberliegenden Seite dieser Kammer ragen zwei Arme hervor, die als Kontrollkammer bzw. als Testkammer dienen. Die Kontrollkammer ist entweder mit reiner Luft oder mit einer Vergleichssubstanz bzw. einem Vergleichssubstanzgemisch durchströmt, während in die Testkammer die jeweiligen zu testenden Duftstoffe abgegeben werden.

Die Durchströmungsraten sind hierbei von der jeweiligen Testsubstanz abhängig. Bei den dargestellten Messungen lagen diese bei 30 ml/min für 2-Undecanon und bei 100 ml/min für Decansäuremethylester (bei Vorlage des gesättigten Gasraumes über der reinen Flüssigkeit; Dampfdruck von 2-Undekanon 1,3036 * 10⁻² Pa; Dampfdruck von Decansäuremethylester 1,3036 * 10⁻² Pa).

Pro Versuch wurden jeweils bestimmt:
(1) der Anteil an Mücken, der in der Testkammer gefangen wurde,
(2) der Anteil an Mücken, der in der Kontrollkammer gefangen wurde,
(3) der Anteil an Mücken, der die Freisetzungskammer verlassen hat (Gesamtaktivität der Mücken).

Der Vergleich zwischen (1) und (2) macht die Attraktivität des jeweiligen Duftstoffes im Vergleich zu reiner Luft deutlich.

Die in den Figuren 2 bis 6 gezeigten Diagramme repräsentieren jeweils den Mittelwert in Prozent aus 8 Versuchen (N=8). Die Standardabweichung in Prozent ist ebenfalls graphisch dargestellt.

Der genaue Versuchsaufbau lässt sich bspw. aus Geier et al., Chem. Senses 24: 647-653, 1999 entnehmen.

Figur 2 zeigt die attraktive Wirkung von Decansäuremethylester auf die Gelbfieber- und Denguefieber-Mücke *Aedes aegypti*. 77,6 % der eingesetzten Mücken verließen die Freisetzungskammer, was als Maß der Aktivität der Mücken dient. 25,1 % der Mücken wurden in der Testkammer gefangen, während nur 3,1 % der Mücken in der Kontrollkammer gefangen wurden. Decansäuremethylester zeigt also bereits alleine und nicht in Kombination mit anderen Duftstoffen eine signifikante Lockwirkung auf Mücken der Art *Aedes aegypti.*

Figur 3 verdeutlicht in analoger Weise die attraktive Wirkung von 2-Undecanon auf *Aedes aegypti.* Bei einer Gesamtaktivität der Mücken von 78,6 % wurden 28,3 % der Mücken in der Testkammer und nur 2,5 % der Mücken in der Kontrollkammer gefangen. Auch hier ist eine deutliche Attraktivität der Substanz in Alleingabe zu sehen.

Figur 4 zeigt die attraktive Wirkung von Decansäuremethylester in Kombination mit einer Lockstoffzusammensetzung aus Ammoniak, Milchsäure und Capronsäure im Vergleich zu der reinen Lockstoffzusammensetzung auf *Aedes aegypti.* Die Lockstoffzusammensetzung ist bekannt (WO 03/103395 A1) und wurde in ihrer bislang wirksamsten Kombination und Konzentration in Form eines Dispensors (Duftkörper) angeboten. Identisch gebaute und befüllte Dispensoren wurden jeweils in der Testkammer als auch in der Kontrollkammer platziert. In der mit Decansäuremethylester durchströmten Testkammer wurden bei einer Gesamtaktivität der Mücken von 95,2 % 63,6 % der Mücken gefangen, während im Vergleich dazu in der Kontrollkammer (also angelockt alleine von der bekannten Lockstoffzusammensetzung ohne der erfindungsgemäßen Substanz) nur 22,7 % der Mücken gefangen wurden.

Figur 5 stellt analog zu Figur 4 die attraktive Wirkung von 2-Undecanon in Kombination mit einer Lockstoffzusammensetzung aus Ammoniak, Milchsäure und Capronsäure im Vergleich zu der reinen Lockstoffzusammensetzung auf *Aedes aegypti* dar. In diesem Test haben 97,1 % der Mücken die Freisetzungskammer verlassen. 63,2 % der Mücken wurden in der Testkammer gefangen und im Vergleich dazu nur 27,3 % in der Kontrollkammer.

In beiden Fällen ist also eine deutliche Steigerung der Lockwirkung der bekannten Lockstoffzusammensetzung durch die erfindungsgemäßen Substanzen sichtbar.

Figur 6 stellt schließlich die gattungsübergreifende Wirkung der erfindungsgemäßen Substanzklasse am Beispiel der attraktiven Wirkung von 2-Undecanon in Kombination mit einer Lockstoffzusammensetzung aus Ammoniak, Milchsäure und Capronsäure auf *Culex quinquefasciatus* dar. Die Messung wurde analog zu den zu Figur 4 und Figur 5 dargestellten Messungen wiederum im Vergleich zu der bekannten Lockstoffzusammensetzung durchgeführt. Im Gegensatz zur antropophilen Gelbfieber- und Denguefieber-Mücke *Aedes aegypti* ist *Culex quinquefasciatus* eine eher ornithophile Mückenart, die unter anderem Filarien (Filariose) und West Nile Viren (Enzephalitis) übertragen kann. Dennoch zeigt 2-Undecanon auch auf diese Mückenart eine Lockwirkung, die ähnlich stark ist wie die Lockwirkung auf *Aedes aegypti.* Bei einer Gesamtaktivität der Mücken von 81,3 % wurden 34,7 % der Mücken in der Testkammer und nur 17,2 % in der Kontrollkammer gefangen.

Die hier vorgestellten Substanzen sind bei Abgaberaten im physiologischen Bereich von 0,003 - 0,950 µmol/h für Stechmücken attraktiv.

Die beschriebene Substanzklasse stellt eine neuartige Lockstoffklasse dar, die bislang als Insektenabwehrmittel verwendet wurde, und noch nicht in einem Wirtsduft nachgewiesen werden konnte. Für die neue Klasse von Lockstoffen konnte eine gattungsübergreifende Wirkung unabhängig vom bevorzugten Blutwirt nachgewiesen werden. Generell sind die erfindungsgemäßen Substanzen einfach und kostengünstig herstellbar. Damit ist die beschriebene Substanzklasse dazu geeignet, auf einfache und kostengünstige Weise eine effektivere Bekämpfung von Insekten, insbesondere von Schadinsekten und hierbei insbesondere von Krankheiten übertragenden, Blut saugenden Insekten wie Stechmücken, zu ermöglichen. Erfindungsgemäße Substanzen bzw. Gemische lassen sich bspw. in Fallensystemen einsetzten, um die Fangraten zu erhöhen.

## Patentansprüche

1. Mittel zum Anlocken von Insekten, das wenigstens eine Verbindung der Formel (I) aufweist: 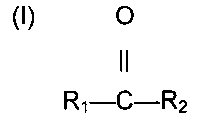
wobei
R₁ eine verzweigte oder unverzweigte Alkylkette mit 1 bis 30 C-Atomen ist, und
R₂ ausgewählt ist aus der Gruppe bestehend aus: eine verzweigte oder unverzweigte Alkylkette mit 1 bis 30 C-Atomen, -H, -CH₃, -OH, -O-CH₃.

2. Mittel zum Anlocken von Insekten, das wenigstens eine Verbindung der Formel (I) aufweist: 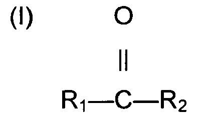
wobei
R₁ eine verzweigte oder unverzweigte Alkylkette mit 3 bis 20 C-Atomen ist, und
R₂ ausgewählt ist aus der Gruppe bestehend aus: -H, -CH₃, -OH, -O-CH₃.

3. Mittel zum Anlocken von Insekten nach Anspruch 1, wobei
R₁ eine verzweigte oder unverzweigte Alkylkette mit 4 bis 14 C-Atomen ist, und
R₂ ausgewählt ist aus der Gruppe bestehend aus: -CH₃, -O-CH₃.

4. Mittel zum Anlocken von Insekten nach einem der voranstehenden Ansprüche, das mit einer Rate von 0,003 - 0,950 µmol/h abgegeben wird.

5. Mittel zum Anlocken von Insekten nach einem der voranstehenden Ansprüche, das jeweils nur eine der genannten Verbindungen aufweist.

6. Mittel zum Anlocken von Insekten nach einem der voranstehenden Ansprüche, das mehrere der genannten Verbindungen aufweist.

7. Mittel zum Anlocken von Insekten nach einem der voranstehenden Ansprüche, das in Kombination mit wenigstens einem weiteren Lockstoff oder wenigstens einer weiteren Lockstoffzusammensetzung vorliegt.

8. Mittel nach einem der voranstehenden Ansprüche, das in Kombination mit wenigstens einem der folgenden Lockstoffe und/oder wenigstens einer der folgenden Lockstoffzusammensetzungen vorliegt:
a) Kohlendioxid und/oder
b) Ammoniak, Milchsäure und eine langkettige Fettsäure, insbesondere Ammoniak, Milchsäure und Capronsäure.

9. Mittel nach einem der voranstehenden Ansprüche, das in Kombination mit wenigstens einem physikalischen Lockreiz vorliegt.

10. Mittel nach Anspruch 7, bei dem der physikalische Lockreiz ausgewählt ist aus:
a) Wärme und/oder
b) Luftfeuchte und/oder
c) optisches Signal.
